# EUROPÄISCHE PATENTANMELDUNG

(11) **EP 1 248 340 A1**
(43) Veröffentlichungstag der Anmeldung: **09.10.2002**
(21) Anmeldenummer: 02003616.6
(22) Anmeldetag: 16.02.2002
(51) Int. Cl.: H02B 13/00, H02B 1/30

(54) **Kupplung für elektrische Schaltanlagen**

(30) Priorität: 04.04.2001 DE 10116896
(71) Anmelder: Felten & Guilleaume AG, 51063 Köln (DE)
(72) Erfinder: Kaulbars, Armin, 47877 Willich (DE); Rouhs, Thomas, 47802 Krefeld (DE)

(57) **Zusammenfassung**

Die Erfindung betrifft eine mechanische Kupplung zwischen benachbarten Schaltfeldwänden zweier nebeneinander stehender Schaltfelder. Die Kupplung ist so aufgebaut, dass an einer Wand (**1**) eines ersten Schaltfeldes (**10**) mindestens ein Führungsbolzen (**50**) und an oder in einer Wand (**1**) eines anderen Schaltfeldes (**10**) mindestens eine Aufnahmebohrung (**62**) für eine Aufnahme des Führungsbolzen (**50**) vorhanden sind, wobei Länge und Ausrichtung von Aufnahmebohrung (**62**) und Führungsbolzen (**50**) derart ausgebildet sind, dass nach Ineinanderfügen von Aufnahmebohrung (**62**) und Führungsbolzen (**50**) eine parallele Lage der benachbarten Schaltfeldwände (**1**) erreicht wird.

## Beschreibung

Die Erfindung betrifft eine mechanische Kupplung für elektrische Schaltanlagen.

Zwei Schaltanlagen sollen mit einer mechanischen Kupplung für benachbarte Schaltfeldwände zweier nebeneinander stehender Schaltfelder ausgerüstet werden. Aus der Druckschrift WO 9740563 A1 ist eine Sammelschienenverbindung bekannt, bei der jedoch die Art der Befestigung und eine Kupplung der nebeneinander stehenden Schaltfelder nicht dargestellt ist. Die verwendete Sammelschienenverbindung ist für eine Festverbindung der Schaltfelder ausgestaltet. Hinweise auf eine Möglichkeit von einfachem Trennen und Wiederverbinden der Schaltfelder sind nicht vorhanden.

Eine Zentriervorrichtung für die mechanische Kupplung zweier Gehäuse mittels Bolzen und konusförmigen Zwischenstücken wird in der DE 195 12 380 C2 gezeigt. Eine wandparallele Lage der Gehäuse kann nur erreicht werden, wenn mindestens zwei Kupplungen miteinander durch Verschraubung in Eingriff gebracht werden. Weiterhin hat diese Kupplung den Nachteil, dass Bolzen und Zwischenstücke als Einzelteile verwendet werden, die leicht verloren gehen können.

Der Erfindung liegt daher die Aufgabe zugrunde, eine Kupplung anzugeben, die ein sicheres Verbinden und einfaches Trennen der Schaltfelder ermöglicht.

Die Aufgabe wird erfindungsgemäß durch die Merkmale des unabhängigen Anspruches gelöst, während den abhängigen Ansprüchen vorteilhafte Weiterbildungen der Erfindung zu entnehmen sind.

Der Kern der Erfindung liegt darin, dass an oder in einer Wand eines ersten Schaltfeldes mindestens ein Führungsbolzen und an oder in einer Wand eines anderen Schaltfeldes mindestens eine Aufnahmebohrung für die Aufnahme des Führungsbolzen vorhanden ist, wobei die Aufnahmebohrung und der Führungsbolzen zueinander ausgerichtet sind und nach Ineinanderfügen des Führungsbolzens in der Aufnahmebohrung eine parallele Lage der benachbarten Schaltfeldwände der Schaltfelder mit definiertem Abstand erreicht wird. Der Führungsbolzen und die Aufnahmebohrung haben eine solche Länge, dass die Ausrichtung der beiden Schaltfelder zueinander zwangsweise erfolgt. Ein Verschrauben der Teile der Kupplung ist nicht unbedingt notwendig.

Die benachbarten Schaltfeldwände werden im folgenden mit ,Nachbarwände' bezeichnet. Eine solche mechanische Kupplung ermöglicht die präzise und kontaktsichere elektrische Verbindung zwischen benachbart angeordneten Schaltfeldern von Schaltanlagen, insbesondere für Mittelspannung, wobei die Schaltfelder über mindestens eine Sammelschiene oder einer vergleichbaren Verbindung elektrisch miteinander kontaktiert sind. Die elektrische Verbindung befindet sich isoliert eingesetzt in den benachbarten Wänden der Schaltfelder.

Mit der Erfindung kann die elektrische Kupplung (insbesondere eine Sammelschienenkupplung) besonders kurz gebaut sein.

Ohne aufwendige Umbaumaßnahmen kann eine ungekuppelte Schaltanlage an eine zweite angekuppelt oder eine gekuppelte Schaltanlage abgetrennt und verschlossen werden. Die eingesetzten mechanischen Teile sind einfach aufgebaut, leicht herstellbar und bestehen fast nur aus mechanischen Standard-Teilen. Mit der Erfindung liegt eine sehr wirtschaftliche Lösung vor.

In weiterführenden Ausführungen sind noch folgende Merkmale einzeln oder auch in Kombination von Bedeutung.

Die Schaltfelder sind mit einer Schraubverbindung zusammenziehbar, und die Schraubverbindung besteht aus einer Verbindungsschraube und einer Gegenmutter. Die Verbindungsschraube durchgreift die Aufnahmebohrung und den hohlzylindrischen Führungsbolzen und fasst in ein im Führungsbolzen ausgebildetes Gewinde.

Ein Distanzstück oder Abstandshalter bestimmen die Endlage der zueinander zusammengezogenen Nachbarwände. Vorzugsweise ist das Distanzstück als Bund am Führungsbolzen ausgebildet. Die Endlage der zueinander zusammengezogenen Nachbarwände ist auf die den Abstand der Schaltfeldwände bestimmenden Abmessungen der elektrischen Kupplung einschließlich der Befestigungselemente für die elektrische Kupplung abgestimmt. Passend dazu ist die Länge der Führungsbolzen und die Lage der Gegenmutter auf die Abmessungen der elektrischen Verbindungselemente bemessen. Zeitlich vor der mechanischen Kupplung zweier Schaltfelder werden die elektrischen Verbindungselemente (Isolierkörper, Kupplungsbolzen) vorbereitet und angeschraubt. Hierbei stehen die Verbindungselemente notwendigerweise räumlich aus der Ebene der Nachbarwände heraus. Mindestens um diesen Überstand sind die Führungsbolzen länger, so dass sie mechanisch eher ,greifen', bevor die elektrischen Verbindungselemente in Kontakt treten.

Ein Führungsbolzen ist zylindrisch ausgebildet und an seinem freien Ende konisch angeschrägt, so dass ein einfaches und sicheres Finden von Führungsbolzen und Aufnahmebohrung möglich ist.

Für den Fall, dass Führungsbolzen und Aufnahmerohr nicht an oder in einer der Nachbarwände ausgebildet sind, sind der Führungsbolzen und das Aufnahmerohr an je einem Befestigungswinkel angeordnet, der jeweils an einer Außenwand oder einer Kante der Nachbarwände angebracht sein kann.

Mindestens zwei Kupplungen sind vorgesehen. Der oder die elektrischen Kontakte, beispielsweise je eine Sammelschiene für eine Phase liegen zwischen den Kupplungen. Die Lage sollte vorzugsweise so sein, dass die Kontakte auf der Verbindungslinie zweier mechanischer Kupplungen oder anderweitig symmetrisch zu den Kupplungen liegen.

Weitere Einzelheiten und Vorteile der Erfindung ergeben sich aus den folgenden, anhand von Figuren erläuterten Ausführungsbeispielen. Es zeigen im Einzelnen
Fig. 1A und 1 B zwei Lagen zweier Schaltfelder,
Fig. 2 den ersten Befestigungswinkel,
Fig. 3 den Führungsbolzen,
Fig. 4 das Aufnahmerohr und
Fig. 5 die Verbindungsschraube.

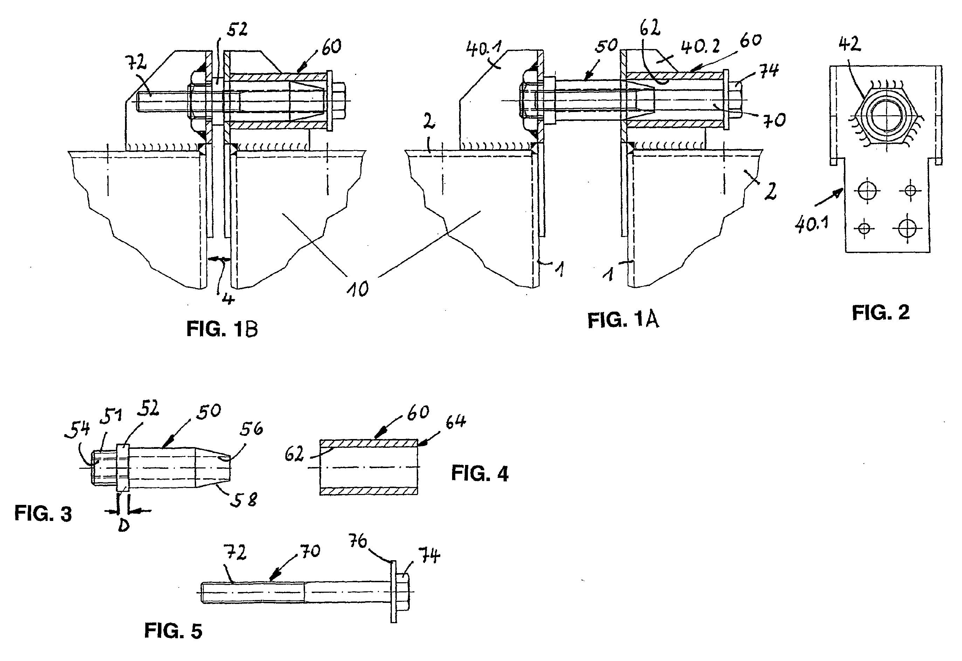

Die Verschraubung der Schaltfeldwände, mit der die Schaltfelder zueinander festgelegt werden, erfolgt vorzugsweise über zwei erfindungsgemäße Kupplungen. Die Figur 1 zeigt (in 1A) im größeren Abstand und (in Fig. 1B) die Endlage (mit dem Abstand 4) zweier gekuppelter Schaltfelder 10.

An den Schaltfeldern sind mindestens je ein Befestigungswinkel 40.1, 40.2 angebracht. Einer der Befestigungswinkel trägt das Aufnahmerohr 60 und der andere den Führungsbolzen 50. Der zweite Befestigungswinkel 40.2 dient mit dem angeschweißten Aufnahmerohr 60 mit zylindrischer Durchgangsbohrung (Aufnahmebohrung 62) der Aufnahme des Führungsbolzens 50. Aufnahmerohr und Führungsbolzen haben eine solche Länge, dass die parallele Ausrichtung der Nachbarwände der beiden Schaltfelder zueinander zwangsweise erfolgt.

Die Kupplung wird dadurch hergestellt, dass die Nachbarwände 1 zueinander hin geführt werden. Dabei finden sich die Führungsbolzen 50 über die konische Anschrägung 58 mit den Bohrungen 62 in den Aufnahmerohren 60. Die Kupplung lässt sich weiterhin verschrauben. Die Verbindungsschraube 70 wird auf der Seite jedes Aufnahmerohrs eingeführt, bis das Gewinde 72 der Verbindungsschraube 70 in das Innengewinde 54 des Führungsbolzens 50 faßt. Durch Drehen der Verbindungsschraube 70 am Sechskantkopf 74, der sich über eine Kopfscheibe 76 am freien Rand 64 des Aufnahmerohrs 60 abstützt, werden die Nachbarwände 1 an den beiden Kupplungen gleichmäßig und parallel zusammen gezogen. Die Endlage wird erreicht, wenn die Befestigungswinkel an einem Distanzstück anschlagen. In der Zeichnung Fig. 3 ist das Distanzstück ein Bund 52 am Führungsbolzen 50. Der Wandabstand 4 in der Endlage beträgt unter Einschluss der Blechdicken D. Das Distanzstück 52 kann als Schlüssel-Sechskant ausgebildet sein. Der Führungsbolzen 50 hat ein Außengewinde 51 und wird in den Befestigungswinkel eingeschraubt.

Figur 2 zeigt den ersten Befestigungswinkel 40.1, an dem eine angeschweißte Gewindemutter 42 als Aufnahme für das Außengewinde 51 des Führungsbolzens 50 vorhanden ist. Beide Befestigungswinkel 40.1, 40.2 sitzen an einer Kante der Nachbarwand 1 und sind an dieser Außenwand 2 angeschweißt. Die Außenwand 2 liegt senkrecht zur einer Nachbarwand 1. Es ist für den Fachmann klar, dass diese Art der Anordnung auch leicht abgewandelt werden kann, wobei es allein darauf ankommt, dass Führungsbolzen 50 und Aufnahmebohrung 60 zueinander fluchten und eine parallele Endlage der Nachbarwände zueinander erreichbar ist. Hiermit wird ein präzises Ineinanderfassen der Kontaktteile der nicht dargestellten elektrischen Verbindung (beispielsweise eine Sammelschiene) erreicht. Eine Abwandlung kann darin bestehen, dass eine oder alle Aufnahmebohrungen direkt an oder in einer Nachbarwand ausgebildet und der oder die zugehörigen Führungsbolzen an oder in der entsprechenden Wand gegenüber angeordnet sind.

Wie erwähnt, wird in die Gewindebohrung 42 der zylindrische Führungsbolzen 50 eingeschraubt. Der Führungsbolzen ist innen hohl (mit der zylindrischen Bohrung 56) und hat vorzugsweise schaltfeldwandseitig ein Innengewinde 54. Das Innengewinde 54 dient der Aufnahme des Gewindeschafts 72 der Verbindungsschraube 70.

## Patentansprüche

1. Mechanische Kupplung zwischen benachbart angeordneten Schaltfeldern **(10)** von Schaltanlagen, insbesondere für Mittelspannung,
wobei die Schaltfelder **(10)** über mindestens eine elektrische Verbindung elektrisch miteinander gekuppelt sind und die elektrische Verbindung in den Wänden **(1)** der Schaltfelder **(10)** isoliert eingesetzt ist,
und dass an oder in benachbarten Wänden **(1)** (im folgenden mit ,Nachbarwände' bezeichnet) nebeneinander angeordneter Schaltfelder **(10)** Einrichtungen **(50,62)** für die mechanische Kupplung angebracht sind,
**dadurch gekennzeichnet, dass** die Einrichtungen **(50,62)** an oder in einer Wand **(1)** eines ersten Schaltfeldes **(10)** aus mindestens einem Führungsbolzen **(50)** und an oder in einer Wand **(1)** eines anderen Schaltfeldes **(10)** mindestens aus einer Aufnahmebohrung **(62)** für eine Aufnahme des Führungsbolzens **(50)** besteht und
dass Länge und Ausrichtung von Aufnahmebohrung **(62)** und Führungsbolzen **(50)** derart ausgebildet sind, dass nach Ineinanderfügen von Aufnahmebohrung **(62)** und Führungsbolzen **(50)** eine parallele Lage der Nachbarwände **(1)** erreicht wird.

2. Kupplung nach Anspruch 1, **dadurch gekennzeichnet, dass** die Aufnahmebohrung (62) in einem Aufnahmerohr (60) ausgebildet ist.

3. Kupplung nach Anspruch 1 oder 2, **dadurch gekennzeichnet, dass** die Schaltfelder (10) mit einer Schraubverbindung zusammenziehbar sind, und die Schraubverbindung aus einer Verbindungsschraube (70) und einer Gegenmutter (42) besteht.

4. Kupplung nach Anspruch 3, **dadurch gekennzeichnet, dass** die Verbindungsschraube (70) das Aufnahmerohr (60) und den hohlzylindrisch ausgebildeten Führungsbolzen (50) durchgreift und in ein im Führungsbolzen (50) ausgebildetes Gewinde (54) fasst.

5. Kupplung nach einem der vorhergehenden Ansprüche, **dadurch gekennzeichnet, dass** die die Endlage (4) der Schaltfelder (10) bestimmenden Abmessungen der elektrischen Verbindung einschließlich zueinander zusammengezogenen Nachbarwände (1) auf die den Abstand der Schaltfeldwände der Befestigungselemente für die elektrische Verbindung abgestimmt ist.

6. Kupplung nach Anspruch 5, **dadurch gekennzeichnet, dass** ein Distanzstück (52) vorhanden ist, welches die Endlage (4) der zueinander zusammengezogenen Nachbarwände (1) bestimmt.

7. Kupplung nach dem vorhergehenden Anspruch, **dadurch gekennzeichnet, dass** das Distanzstück als Bund (52) am Führungsbolzen (50) ausgebildet ist.

8. Kupplung nach einem der vorhergehenden Ansprüche, **dadurch gekennzeichnet, dass** der Führungsbolzen (50) zylindrisch ausgebildet ist und an seinem freien Ende (58) konisch angeschrägt ist.

9. Kupplung nach einem der vorhergehenden Ansprüche, **dadurch gekennzeichnet, dass** der Führungsbolzen (50) und das Aufnahmerohr (62) an je einem Befestigungswinkel (40.1, 40.2) angeordnet sind, der jeweils an einer Kante der Nachbarwände (1) angebracht ist.

10. Kupplung nach einem der vorhergehenden Ansprüche, **dadurch gekennzeichnet, dass** mindestens zwei Kupplungen (40, 50, 60, 70) vorgesehen sind und die elektrische Verbindung zwischen den Kupplungen angeordnet ist.
